# EUROPÄISCHE PATENTANMELDUNG

(11) **EP 2 731 298 A1**
(43) Veröffentlichungstag der Anmeldung: **14.05.2014**
(21) Anmeldenummer: 12191530.0
(22) Anmeldetag: 07.11.2012
(51) Int. Cl.: H04L 12/40, H04L 29/12

(54) **Kommunikationssystem**

(71) Anmelder: Siemens Aktiengesellschaft, 80333 München (DE)
(72) Erfinder: Premke, Markus, 93055 Regensburg (DE)

(57) **Zusammenfassung**

Die Erfindung betrifft ein Verfahren zum sicheren Kommunizieren innerhalb eines Kommunikationssystems mittels des OFDM Verfahrens zwischen einem Master (1) und einem Slave (20,21,22). Um eine sichere Kommunikation innerhalb des OFDM Kommunikationssystems vom Master (1) zum Slave (20,21,22) bereitzustellen wird vorgeschlagen, dass der Master (1) über einen Verwaltungskanal (5) und über einen Nutzdatenkanal (6) mit dem Slave (20,21,22) kommunizieren kann, wobei der Master (1) über den Verwaltungskanal (5) dem Slave (20,21,22) zu verwendende Frequenzspektren für den Nutzdatenkanal (6) zuweist, wobei dem Master (1) eine Adresse des Slaves (20,21,22) zugewiesen wird und der Master (1) daraufhin die dem Slave (20,21,22) zugewiesene Adresse einem der zu verwendenden Frequenzspektren für den Nutzdatenkanal (6) zwischen dem Slave (20,21,22) und dem Master (1) zuweist, wobei der Master (1) über den Verwaltungskanal (5) dem Slave (20,21,22) die dem Slave (20,21,22) zugewiesene Adresse überträgt und der Slave (20,21,22) die ihm übertragene Adresse in seinem ersten Mikrocontroller (8) hinterlegt, wobei der Master (1) die Adresse des Slaves (20,21,22) über das Frequenzspektrum, welches der Adresse des Slaves (20,21,22) zugewiesen ist, überträgt und der Slave (20,21,22) die über den Nutzdatenkanal (6) empfangene Adresse in seinem zweiten Mikrocontroller (9) ablegt, wobei der Slave (20,21,22) überprüft, ob die im ersten Mikrocontroller (8) hinterlegte Adresse mit der im zweiten Mikrocontroller (9) abgelegten Adresse übereinstimmt.

## Beschreibung

Die Erfindung betrifft ein Verfahren zum sicheren Kommunizieren innerhalb eines Kommunikationssystems sowie ein derartiges Kommunikationssystem.

Bei dem Kommunikationssystem handelt es sich insbesondere um ein Kommunikationssystem innerhalb der industriellen Automatisierungstechnik. Das Kommunikationssystem wird vorzugsweise auf der Sensor-/Aktuatorebene eingesetzt.

Das Kommunikationssystem umfasst mindestens einen Slave und einen Master, welcher über den Kommunikationsbus mit dem Slave bzw. den Slaves verbunden ist. Der Master kann über den Kommunikationsbus mit dem Slave bzw. den Slaves kommunizieren.

Die Datenübertragung innerhalb des Kommunikationssystems erfolgt mittels des OFDM Verfahrens. OFDM (Orthogonal Frequency-Division Multiplexing; deutsch: Orthogonales Frequenzmultiplexverfahren) ist ein Modulationsverfahren, welches mehrere orthogonale Träger zur digitalen Datenübertragung verwendet.

Wird mittels des Masters und des Slaves eine sicherheitskritische Applikation gesteuert, so muss sichergestellt werden, dass stets eine ordnungsgemäße Kommunikation vom Master zum Slave erfolgt bzw. dass eine fehlerhafte Kommunikation erkannt wird. Master und Slaves, welche eine derartige sichere Kommunikation erfüllen werden üblicherweise als sichere Master und sichere Slaves bezeichnet.

Es ist Aufgabe der vorliegenden Erfindung eine sichere Kommunikation innerhalb eines OFDM Kommunikationssystems vom Master zum Slave bereitzustellen.

Diese Aufgabe wird gelöst durch ein Verfahren gemäß Anspruch 1, d.h. durch ein Verfahren zum sicheren Kommunizieren innerhalb eines Kommunikationssystems mit einem Master, einem Kommunikationsbus und einem Slave, welcher einen ersten und einen zweiten Mikrocontroller umfasst, wobei der Slave über den Kommunikationsbus mit dem Master verbunden ist, wobei der Master über einen Verwaltungskanal und über einen Nutzdatenkanal mit dem Slave kommunizieren kann, wobei die Kommunikation vom Master zum Slave mittels des OFDM Verfahrens erfolgt, wobei bei der Kommunikation über den Verwaltungskanal stets ein anderes Frequenzspektrum genutzt wird als bei der Kommunikation über den Nutzdatenkanal, wobei der Master über den Verwaltungskanal dem Slave zu verwendende Frequenzspektren für den Nutzdatenkanal zuweist, wobei dem Master eine Adresse des Slaves zugewiesen wird und der Master daraufhin die dem Slave zugewiesene Adresse einem der zu verwendenden Frequenzspektren für den Nutzdatenkanal zwischen dem Slave und dem Master zuweist, wobei der Master über den Verwaltungskanal dem Slave die dem Slave zugewiesene Adresse überträgt und der Slave die ihm übertragene Adresse im ersten Mikrocontroller hinterlegt, wobei der Master die Adresse des Slaves über das Frequenzspektrum, welches der Adresse zugewiesen ist, überträgt und der Slave die über den Nutzdatenkanal empfangene Adresse im zweiten Mikrocontroller ablegt, wobei der Slave überprüft, ob die im ersten Mikrocontroller hinterlegte Adresse mit der im zweiten Mikrocontroller abgelegten Adresse übereinstimmt, und eine Vorrichtung gemäß Anspruch 6, d.h. durch ein Kommunikationssystem mit einem Master, einem Kommunikationsbus und einem Slave, welcher einen ersten und einen zweiten Mikrocontroller umfasst, wobei der Slave über den Kommunikationsbus mit dem Master verbunden ist, wobei der Master über einen Verwaltungskanal und über einen Nutzdatenkanal mit dem Slave kommunizieren kann, wobei die Kommunikation vom Master zum Slave mittels des OFDM Verfahrens erfolgt, wobei bei der Kommunikation über den Verwaltungskanal stets ein anderes Frequenzspektrum genutzt wird als bei der Kommunikation über den Nutzdatenkanal, wobei der Master und der Slave derart ausgebildet sind, dass:
- der Master über den Verwaltungskanal dem Slave zu verwendende Frequenzspektren für den Nutzdatenkanal zuweisen kann,
- dem Master eine Adresse des Slaves zugewiesen werden kann,
- der Master die dem Slave zugewiesene Adresse einem der zu verwendenden Frequenzspektren für den Nutzdatenkanal zwischen dem Slave und dem Master zuweisen kann,
- der Master über den Verwaltungskanal dem Slave die dem Slave zugewiesene Adresse übertragen kann,
- der Slave die ihm übertragene Adresse im ersten Mikrocontroller hinterlegen kann,
- der Master die Adresse des Slaves über das Frequenzspektrum, welches der Adresse des Slaves zugewiesen ist, übertragen kann,
- der Slave die über den Nutzdatenkanal empfangene Adresse im zweiten Mikrocontroller ablegen kann,
- der Slave überprüfen kann, ob die im ersten Mikrocontroller hinterlegte Adresse mit der im zweiten Mikrocontroller abgelegten Adresse übereinstimmt.

Vorteilhafte Weiterbildungen der Erfindung sind in den abhängigen Ansprüchen 2 bis 5 angegeben.

Die Kommunikation vom Master zum Slave über den Verwaltungskanal und den Nutzdatenkanal erfolgt mittels des OFDM Verfahrens. Hierbei sind vorzugsweise die Frequenzspektren des Verwaltungskanals fest im Master und/oder Slave hinterlegt.

Vorzugsweise erfolgt innerhalb des Kommunikationssystems die Kommunikation vom Slave zum Master ebenso mittels des OFDM Verfahrens.

Bei der Zuweisung der zu verwendenden Frequenzspektren des Nutzdatenkanals, bezüglich der Kommunikation vom Master zum Slave über den Nutzdatenkanal, erfolgt vorzugsweise eine vorgeschaltete Auswertung der zur Verfügung stehenden Frequenzspektren des Nutzdatenkanals durch den Master. Vorzugsweise werden durch den Master dem Slave die Frequenzspektren für den Nutzdatenkanal zugewiesen, welche eine hohe Übertragungsqualität garantieren. Insbesondere soll der Signalrauschabstand möglichst weit über einem definierten Mindestsignalrauschabstand liegen. Die Zuweisung der zu verwendenden Frequenzspektren des Nutzdatenkanals für die Kommunikation zwischen dem Master und dem Slave über den Nutzdatenkanal erfolgt durch den Master über den Verwaltungskanal.

Der mit der Erfindung erzielte Vorteil besteht darin, dass der Slave durch einen Abgleich der über den Nutzdatenkanal übertragenen Adresse mit der im Slave hinterlegten Adresse, welche er über den Verwaltungskanal vom Master erhalten hat, überprüfen kann, ob die über den Nutzdatenkanal erfolgte Kommunikation vom Master zum Slave ordnungsgemäß erfolgte. Stimmt die über den Nutzdatenkanal empfangene Adresse mit der hinterlegten Adresse überein, so liegt eine ordnungsgemäße Kommunikation vor. Stimmt die über den Nutzdatenkanal empfangene Adresse nicht mit der hinterlegten Adresse überein, so liegt eine fehlerhafte Kommunikation vor. Auf diese Weise kann eine sichere Kommunikation zwischen dem Master und dem Slave gewährleistet werden.

Die einzelnen Schritte des Masters und des Slaves erfolgen vorzugsweise automatisch während der Inbetriebnahme des Kommunikationssystems.

In einer vorteilhaften Ausführungsform der Erfindung liegen die Frequenzspektren des Verwaltungskanals und des Nutzdatenkanals im Bereich zwischen 1 Mhz und 7 Mhz.

In einer weiteren vorteilhaften Ausführungsform der Erfindung wird dem Master über ein Engineering Tool die Adresse des Slaves zugewiesen.

Das Engineering Tool wird insbesondere mittels einer Recheneinheit (z.B. Laptop, PDA oder PC) ausführt. Zur Visualisierung des Engineering Tools umfasst die Recheneinheit selbst ein graphisches Anzeigeelement (Display) oder kann mit einem graphischen Anzeigeelement verbunden werden. Mittels des Engineering Tools kann ein Anwender das Kommunikationssystem parametrieren und insbesondere dem Slave bzw. den Slaves des Kommunikationssystems jeweils eine spezifische Adresse zuweisen. Hierdurch kann eine eindeutige Parametrierung und/oder Auswertung der Slaves des Kommunikationssystems erfolgen.

Zur Übertragung einer dem Slave zugewiesenen Adresse zum Master wird die das Engineering Tool ausführende Recheneineinheit mit dem Master verbunden, so dass eine entsprechende Datenübertragung zwischen der Recheneinheit und dem Master erfolgen kann. Hierfür kann die Recheneinheit direkt mit dem Master verbunden werden. Es ist jedoch ebenso denkbar, dass die Recheneinheit mit einer dem Master vorgeschalteten Steuerung (z.B. eine speicherprogrammierbare Steuerung, kurz: SPS), welche mit dem Master verbunden ist, verbunden wird und über die SPS die Datenübertragung zum Master erfolgt. In einem nachgeschalteten Schritt weist der Master die Adresse des Slaves, welche er von der Recheneinheit erhalten hat, mindestens einem bezüglich des adressierten Slaves zu verwendenden Frequenzspektrums des Nutzdatenkanals zu.

In einer weiteren vorteilhaften Ausführungsform der Erfindung wird bei jeder sicheren Datenübertragung vom Master zum Slave über den Nutzdatenkanal, insbesondere über das dem Slave zugewiesene Frequenzspektrum des Nutzdatenkanals, die dem Slave zugewiesene Adresse übertragen. Vorzugsweise wird innerhalb des Nutzdatenkanals die Adresse des Slaves lediglich über die der Adresse des Slaves zugewiesenen Frequenzspektren des Nutzdatenkanals übertragen. Auf diese Weise kann stets vom Slave kontrolliert werden, ob die Datenübertragung vom Master über den Nutzdatenkanal zum Slave ordnungsgemäß erfolgt oder nicht. Stimmt die über das Frequenzspektrum des Nutzdatenkanals übertragene Adresse nicht mit der im Slave, insbesondere im ersten Mikrocontroller, hinterlegten Adresse, welche der Slave über den Verwaltungskanal erhalten hat, überein, so liegt eine fehlerhafte Kommunikation vor. Vorzugsweise gibt der Slave bei einer fehlerhaften Kommunikation eine entsprechende Fehlermeldung (z.B. an den Master) aus. Ebenso wird vorzugsweise bei einem detektierten Fehler ein über das Frequenzspektrum übertragene Befehl seitens des Slaves nicht umgesetzt. Stimmt die über den Nutzdatenkanal empfangene Adresse mit der im ersten Mikrocontroller hinterlegten Adresse überein, so liegt eine ordnungsgemäße Kommunikation vor.

In einer weiteren vorteilhaften Ausführungsform der Erfindung erfolgt die Kommunikation über den Nutzdatenkanal und/oder über den Verwaltungskanal redundant über zwei Frequenzspektren des jeweiligen Kanals. Das Zuweisen der Adresse des Slaves vom Master zum Slave über den Verwaltungskanal erfolgt somit, vorzugsweise gleichzeitig, über zwei unterschiedliche Frequenzspektren des Verwaltungskanals. Der Master weist ferner die ihm mittels des Engineering Tools zugewiesene Adresse des Slaves zwei Frequenzspektren der zu verwendenden Frequenzspektren des Nutzdatenkanals zwischen dem Slave und dem Master zu. Über die beiden Frequenzspektren des Nutzdatenkanals erfolgt, vorzugsweise gleichzeitig, eine Übertragung der dem Slave zugewiesenen Adresse an den Slave. Der Slave kann folglich die über die beiden Frequenzspektren des Nutzdatenkanals empfangenen Adressen mit der im ersten Mirocontroller hinterlegten Adressen vergleichen. Durch den Abgleich der über den Nutzdatenkanal übertragenen Adressen mit der im ersten Mikrocontroller hinterlegten Adresse kann ein Fehler seitens des Slaves detektiert werden. Ferner kann eine fehlerhafte Datenübertragung durch einen Abgleich der parallel übertragenen Adressen über den Verwaltungskanal und/oder Nutzdatenkanal erkannt werden.

In einer weiteren vorteilhaften Ausführungsform der Erfindung erfolgt die Kommunikation zwischen dem Master und dem Slave bzw. den Slaves mittels AS-Interface (Actuator-Sensor-Interface). Das Kommunikationssystem ist somit ein AS-Interface Kommunikationssystem.

Im Folgenden werden die Erfindung und Ausgestaltungen der Erfindung anhand der in den Figuren dargestellten Ausführungsbeispiele näher beschrieben und erläutert. Es zeigen:
- FIG 1: Eine schematische Darstellung eines Kommunikationssystems,
- FIG 2: eine schematische Darstellung einer sicheren Kommunikation vom Master zum zweiten Slave des Kommunikationssystems der FIG 1.

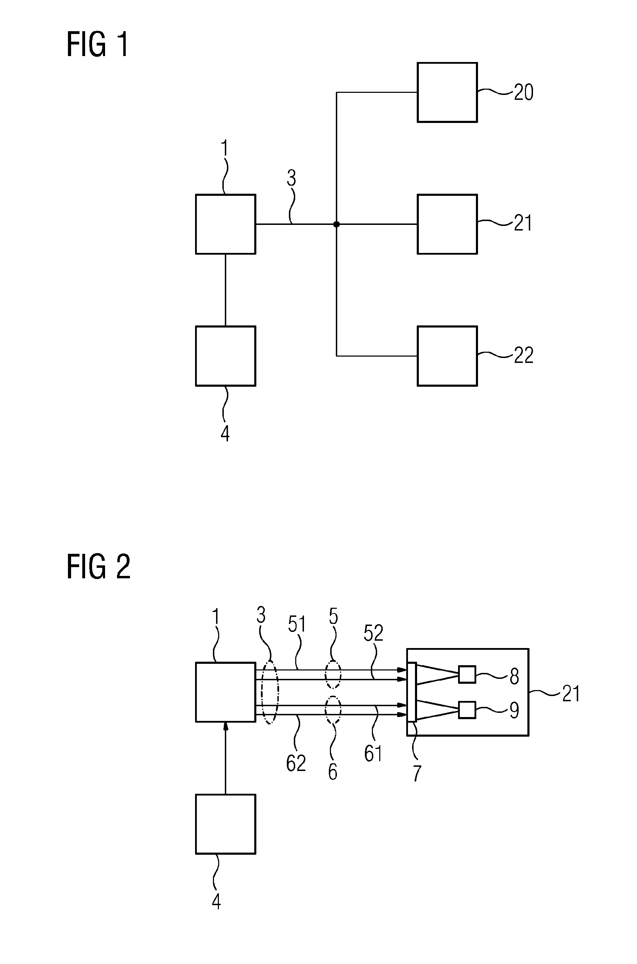

FIG 1 zeigt eine schematische Darstellung eines Kommunikationssystems. Das Kommunikationssystem umfasst einen Master 1, einen Kommunikationsbus 3, einen ersten Slave 20, einen zweiten Slave 21 und einen dritten Slave 22. Die Slaves 20,21,22 sind über den Kommunikationsbus 3 mit dem Master 1 verbunden, so dass der Master 1 über den Kommunikationsbus mit den Slaves 20,21,22 kommunizieren kann. Die Kommunikation zwischen dem Master 1 und den Slaves 20,21,22 erfolgt mittels des OFDM Verfahrens. Das Kommunikationssystem ist ein Kommunikationssystem innerhalb der industriellen Automatisierungstechnik. Mittels der Slaves 20,21,22 werden Sensoren und/oder Aktoren (Sensor-/Aktorebene innerhalb der Automatisierungspyramide) gesteuert.

Der Master 1 ist über eine separate Kommunikationsverbindung mit einer Recheneinheit 4 verbunden. Mittels der Recheneinheit 4 kann ein Anwender ein Engineering Tool zur Parametrierung und Diagnose des Kommunikationssystems ausführen. Hierbei kann er die innerhalb des Kommunikationssystems verwendeten Slaves 20,21,22 definieren und diesen eine eindeutige Adresse zuweisen. Mittels der eindeutigen Adresse der jeweiligen Slaves 20,21,22 kann der Anwender gezielt Parameter des jeweiligen Slaves 20,21,22 festlegen und/oder Diagnoseinformationen des jeweiligen Slaves 20,21,22 auswerten. Die Recheneinheit 4 muss lediglich zur Parametrierung des Kommunikationssystems, insbesondere zur Übertragung der jeweiligen Adresse der Slaves 20,21,22 an den Master 1, mit dem Master 1 verbunden werden. Im applikationsbedingten Betrieb des Kommunikationssystems muss die Recheneinheit 4 nicht mit dem Master 1 verbunden sein.

Innerhalb der industriellen Automatisierungstechnik müssen zur sicherheitsgerichteten Kommunikation innerhalb eines Kommunikationssystems Sicherheitsmechanismen implementiert sein, mittels welchen eine ordnungsgemäße Kommunikation zwischen einem Master und den einzelnen Slaves sichergestellt werden kann.

Figur 2 zeigt eine schematische Darstellung einer sicheren Kommunikation vom Master 1 zum zweiten Slave 21 des Kommunikationssystems der Figur 1. Der Master 1 ist über den Kommunikationsbus 3 mit dem zweiten Slave 21 verbunden. Damit eine sichere Kommunikation vom Master 1 zum zweiten Slave 21 gewährleistet werden kann, muss sichergestellt werden, dass eine fehlerhafte Kommunikation erkannt wird.

Die Kommunikation zwischen dem Master 1 und dem zweiten Slave 21 erfolgt über den Kommunikationsbus 3 mittels des OFDM Verfahrens. Die zur Verfügung stehenden Frequenzspektren des Kommunikationsverfahrens werden hierbei in zwei Gruppen unterteilt. Die erste Gruppe bildet ein Verwaltungskanal 5, welcher mehrere Frequenzspektren umfasst. Die zweite Gruppe bildet ein Nutzdatenkanal 6, welcher ebenso mehrere Frequenzspektren umfasst. Bei der Kommunikation über den Verwaltungskanal 5 wird stets ein anderes Frequenzspektrum genutzt als bei der Kommunikation über den Nutzdatenkanal 6.

Die Frequenzspektren des Verwaltungskanals 5 sind im Master 1 sowie im zweiten Slave 21 fest hinterlegt. Zur Kommunikation mit dem zweiten Slave 21 über den Verwaltungskanal 5 nutzt der Master 1 zwei unterschiedliche Frequenzspektren 51,52 des Verwaltungskanals 5. Über die beiden Frequenzspektren 51,52 des Verwaltungskanals 5 werden teilweise die zu übertragenden Daten redundant übertragen. Hierdurch kann eine erhöhte Fehlerermittlung bezüglich der Datenübertragung über den Verwaltungskanal 5 ermöglicht werden.

Der zweite Slave 21 umfasst einen Kommunikationseingang 7 über welchen er mit dem Kommunikationsbus 3 verbunden ist. Hierüber kann er die vom Master 1 über den Nutzdatenkanal 6 und/oder Verwaltungskanal 5 gesandten Telegramme empfangen. Ferner umfasst der zweite Slave 21 einen ersten und einen zweiten Mikrocontroller 8,9.

Um die Sicherheitsanforderungen innerhalb der industriellen Automatisierungstechnik bezüglich der Sicherheitstechnik zu erfüllen muss eine ordnungsgemäße Kommunikation sichergestellt werden. Es muss seitens des zweiten Slaves 21 sichergestellt werden, ob das vom Master übertragene Telegramm, insbesondere hinsichtlich der Datenübertragung über den Nutzdatenkanal, ordnungsgemäß oder fehlerhaft übertragen wurde. Hierfür wird bezüglich der Kommunikation zwischen dem Master 1 und dem zweiten Slave 21 folgendes Verfahren angewandt.

Ein Anwender kann mittels eines auf einer Recheneinheit 4 ausgeführten Engineering Tools das Kommunikationssystem parametrieren. Hierbei werden durch den Anwender den einzelnen Slaves des Kommunikationssystems spezifische Adressen zugewiesen. Dem ersten, dem zweiten und dem dritten Slave wird folglich jeweils eine spezifische Adresse zugewiesen, so dass über das Engineering Tool eine eindeutige Unterscheidung zwischen den einzelnen Slaves erfolgen kann. Zur Parametrierung des Kommunikationssystems wird die Recheneinheit direkt oder indirekt (über eine SPS) mit dem Master 1 verbunden und ein Parameterdatensatz wird zum Master 1 übertragen. Hierbei werden dem Master 1 die im Engineering Tool vergebenen Adressen der Slaves übermittelt. Dem Master 1 wird somit die Adresse des zweiten Slaves 21 übermittelt, so dass der Master 1 geräteintern die Adresse des zweiten Slaves 21 hinterlegen kann. Die im Master 1 geräteintern hinterlegte Adresse des zweiten Slaves 21 muss nicht der im Engineering Tool visualisierten Adresse des zweiten Slaves 21 entsprechen sondern muss lediglich die im Engineering Tool visualisierte Adresse des zweiten Slaves 21 eindeutig charakterisieren.

Über den Verwaltungskanal 5 weist der Master 1 dem zweiten Slave 21 die zu verwendende Frequenzspektren für den Nutzdatenkanal 6 zu. Hierfür führt der Master 1 zunächst eine Analyse der zur Verfügung stehenden Frequenzspektren des Nutzdatenkanals 6 durch und weist daraufhin dem zweiten Slave 21 eine vordefinierte Anzahl der Frequenzspektren des Nutzdatenkanals zu, welche bezüglich des zweiten Slaves 21 insbesondere das beste Signal-Rausch-Verhältnis haben.

Der zweite Slave 21 empfängt über den Verwaltungskanal 5 diese Information und überwacht daraufhin bezüglich des Nutzdatenkanals 6 die ihm zugewiesenen Frequenzspektren des Nutzdatenkanals 6.

Die dem Master 1 von der Recheneinheit zugewiesene Adresse des zweiten Slaves 21 wird seitens des Masters 1 fest zwei Frequenzspektren 61,62 der zu verwendenden Frequenzspektren des Nutzdatenkanals 6 zwischen dem Master 1 und dem zweiten Slave 21 zugewiesen. Der Master 1 überträgt über den Verwaltungskanal dem zweiten Slave 21 die dem Slave 21 zugewiesene und im Master 1 hinterlegte Adresse. Der zweite Slave 21 hinterlegt daraufhin die ihm übertragene Adresse im ersten Mikrocontroller 8.

In der darauffolgenden Kommunikation vom Master 1 zum zweiten Slave 21 über den Nutzdatenkanal 6 überträgt der Master 1, vorzugsweise bei jedem Telegram vom Master 1 zum zweiten Slave 21 über den Nutzdatenkanal 6, die Adresse des zweiten Slaves 21 über die beiden Frequenzspektren 61,62, welche der Adresse des zweiten Slaves 21 zugewiesen wurden.

Der zweite Slave 21 empfängt über die beiden Frequenzspektren 61,62 des Nutzdatenkanals die vom Master 1 gesandte Adresse und legt die empfangene Adresse im zweiten Mikrocontroller 9 ab.

In einem darauffolgenden Schritt kann der zweite Slave 21 überprüfen, ob die im ersten Mikrocontroller 8 hinterlegte Adresse mit der im zweiten Mikrocontroller 9 abgelegten Adresse übereinstimmt. Stimmt die im ersten Mikrocontroller 8 hinterlegte Adresse mit der im zweiten Mikrocontroller 9 abgelegten Adresse überein, so liegt eine ordnungsgemäße Kommunikation vom Master 1 zum zweiten Slave 21 vor. Stimmt die im ersten Mikrocontroller 8 hinterlegte Adresse nicht mit der im zweiten Mikrocontroller 9 abgelegten Adresse überein, so liegt keine ordnungsgemäße Kommunikation vom Master 1 zum zweiten Slave 21 vor. Ein Fehler wird erkannt. Der zweite Slave 21 gibt ein entsprechendes Warnsignal aus. Ferner wird insbesondere der mittels des fehlerhaften Telegramms übertragne Befehl verworfen. Auf diese Weise kann eine sichere Kommunikation zwischen dem Master 1 und dem zweiten Slave 21 gewährleistet werden. Innerhalb des Kommunikationssystems kann somit ein sicherer Master 1 und ein sicherer Slave 21 bereitgestellt werden.

Der Master 1 ist derart ausgebildet, dass er für die sichere Kommunikation geeignet ist, d.h. er ist in sich sicher oder hat eine sichere dezentrale Auswerteeinheit.

Durch die redundante Übertragung der Telegramme über die beiden Frequenzbänder 51,52 des Verwaltungskanals 5 bzw. die beiden Frequenzbänder 61,62 Nutzdatenkanals 6 erfolgt ferner eine Überprüfung, ob das übertragenen Telegramm ordnungsgemäß seitens des zweiten Slaves 21 empfangen wurde.

Bei der sicheren Kommunikation vom Master 1 zum zweiten Slave 21 erfolgt das Übertragen der Adresse des zweiten Slaves 21 über die beiden Frequenzspektren 61,62 des Nutzdatenkanal insbesondere bei jeder Übermittlung eines Telegramms vom Master 1 zum zweiten Slave 21 über den Nutzdatenkanal 6.

Die Kommunikation zwischen dem Master 1 und dem ersten und dritten Slave erfolgt analog zur Kommunikation zwischen dem Master 1 und dem zweiten Slave 21 mit dem Unterschied, dass dem ersten und dritten Slave jeweils eine unterschiedliche Adresse zugewiesen wird und die zu verwendenden Frequenzbänder für den Nutzdatenkanal 6 sowie die der Adresse des jeweiligen Slaves zugewiesenen Frequenzbänder unterschiedlich sein können. Der erste und dritte Slave des Kommunikationssystems aus Figur 1 ist ferner analog zum zweiten Slave 21 aufgebaut.

Vorzugsweise wird bei jedem Slavetausch und/oder Hochlauf eines Slaves des Kommunikationssystems erneut die im Master 1 hinterlegte Adresse des jeweiligen Slaves dem Slave über den Verwaltungskanal und Nutzdatenkanal übertragen.

Die gewählten verschiedenen Übertragungswege vom Master 1 zum Slave (Eingangs-/Ausgangsslave) genügen der geforderten Diversität, da sie zwar auf dem gleichen physikalischen Medium (z.B. Kabel des Kommunikationsbusses 3) aber über völlig unabhängige Übertragungskanäle (Verwaltungskanal 5 und Nutzdatenkanal 6) redundant und zeitlich versetzt Übertragen werden. Die erste Adresszuweisung findet über den Verwaltungskanal 5 des Kommunikationsbusses 3 statt. Die zweite Adresszuweisung wird über den in sich redundanten Nutzdatenkanal 6 geführt. Die so entstandene Zuweisung erspart das Einstellen der Adresse am jeweiligen Slave des Kommunikationssystems.

Die übertragenen Adressen werden bei den jeweiligen Slaves in unabhängigen Hardwareeinheiten (erster und zweiter Mikrocontroller 8,9) abgelegt, so dass durch einen anschließenden Test kontrolliert werden kann, ob die abgelegten Adressen übereinstimmen. Hierdurch kann eine sichere Kommunikation vom Master 1 zum Slave gewährleistet werden.

Ein Adressieren des Slaves über ein Adressiergerät oder einen Dip-Schalter kann entfallen. Dies bedingt eine Vereinfachung für den Kunden sowie eine Kosteneinsparung, da keine Dip-Schalter bzw. kein gesondertes sicheres Adressiergerät notwendig ist.

## Patentansprüche

1. Verfahren zum sicheren Kommunizieren innerhalb eines Kommunikationssystems mit einem Master (1), einem Kommunikationsbus (3) und einem Slave (20,21,22), welcher einen ersten und einen zweiten Mikrocontroller (8,9) umfasst, wobei der Slave (20,21,22) über den Kommunikationsbus (3) mit dem Master (1) verbunden ist, wobei der Master (1) über einen Verwaltungskanal (5) und über einen Nutzdatenkanal (6) mit dem Slave (20,21,22) kommunizieren kann, wobei die Kommunikation vom Master (1) zum Slave (20,21,22) mittels des OFDM Verfahrens erfolgt, wobei bei der Kommunikation über den Verwaltungskanal (5) stets ein anderes Frequenzspektrum genutzt wird als bei der Kommunikation über den Nutzdatenkanal (6), wobei der Master (1) über den Verwaltungskanal (5) dem Slave (20,21,22) zu verwendende Frequenzspektren für den Nutzdatenkanal (6) zuweist, wobei dem Master (1) eine Adresse des Slaves (20,21,22) zugewiesen wird und der Master (1) daraufhin die dem Slave (20,21,22) zugewiesene Adresse einem der zu verwendenden Frequenzspektren für den Nutzdatenkanal (6) zwischen dem Slave (20,21,22) und dem Master (1) zuweist, wobei der Master (1) über den Verwaltungskanal (5) dem Slave (20,21,22) die dem Slave (20,21,22) zugewiesene Adresse überträgt und der Slave (20,21,22) die ihm übertragene Adresse im ersten Mikrocontroller (8) hinterlegt, wobei der Master (1) die Adresse des Slaves (20,21,22) über das Frequenzspektrum, welches der Adresse des Slaves (20,21,22) zugewiesen ist, überträgt und der Slave (20,21,22) die über den Nutzdatenkanal (6) empfangene Adresse im zweiten Mikrocontroller (9) ablegt, wobei der Slave (20,21,22) überprüft, ob die im ersten Mikrocontroller (8) hinterlegte Adresse mit der im zweiten Mikrocontroller (9) abgelegten Adresse übereinstimmt.

2. Verfahren nach Anspruch 1, wobei die Frequenzspektren des Verwaltungskanals (5) und des Nutzdatenkanals (6) im Bereich zwischen 1 Mhz und 7 Mhz liegen.

3. Verfahren nach einem der vorhergehenden Ansprüche, wobei dem Master (1) über ein Engineering Tool die Adresse des Slaves (20,21,22) zugewiesen wird.

4. Verfahren nach einem der vorhergehenden Ansprüche, wobei bei jeder sicheren Datenübertragung vom Master (1) zum Slave (20,21,22) über den Nutzdatenkanal (6) die dem Slave (20,21,22) zugewiesene Adresse übertragen wird.

5. Verfahren nach einem der vorhergehenden Ansprüche, wobei die Kommunikation über den Nutzdatenkanal (6) und/oder über den Verwaltungskanal (5) redundant über zwei Frequenzspektren des jeweiligen Kanals erfolgt.

6. Kommunikationssystem mit einem Master (1), einem Kommunikationsbus (3) und einem Slave (20,21,22), welcher einen ersten und einen zweiten Mikrocontroller (8,9)umfasst, wobei der Slave (20,21,22) über den Kommunikationsbus (3) mit dem Master (1) verbunden ist, wobei der Master (1) über einen Verwaltungskanal (5) und über einen Nutzdatenkanal (6) mit dem Slave (20,21,22) kommunizieren kann, wobei die Kommunikation vom Master (1) zum Slave (20,21,22) mittels des OFDM Verfahrens erfolgt, wobei bei der Kommunikation über den Verwaltungskanal (5) stets ein anderes Frequenzspektrum genutzt wird als bei der Kommunikation über den Nutzdatenkanal (6), wobei der Master (1) und der Slave (20,21,22) derart ausgebildet sind, dass
- der Master (1) über den Verwaltungskanal (5) dem Slave (20,21,22) zu verwendende Frequenzspektren für den Nutzdatenkanal (6) zuweisen kann,
- dem Master (1) eine Adresse des Slaves (20,21,22) zugewiesen werden kann,
- der Master (1) die dem Slave (20,21,22) zugewiesene Adresse einem der zu verwendenden Frequenzspektren für den Nutzdatenkanal (6) zwischen dem Slave (20,21,22) und dem Master (1) zuweisen kann,
- der Master (1) über den Verwaltungskanal (5) dem Slave (20,21,22) die dem Slave zugewiesene Adresse übertragen kann,
- der Slave die ihm übertragene Adresse im ersten Mikrocontroller (8) hinterlegen kann,
- der Master (1) die Adresse des Slaves (20,21,22) über das Frequenzspektrum, welches der Adresse des Slaves (20,21,22) zugewiesen ist, übertragen kann,
- der Slave (20,21,22) die über den Nutzdatenkanal (6) empfangene Adresse im zweiten Mikrocontroller (9) ablegen kann,
- der Slave (20,21,22) überprüfen kann, ob die im ersten Mikrocontroller (8) hinterlegte Adresse mit der im zweiten Mikrocontroller (9) abgelegten Adresse übereinstimmt.
